(19) Europäisches Patentamt
European Patent Office
Office européen des brevets

(11) Publication number: **0 470 325 A1**

(12) **EUROPEAN PATENT APPLICATION**

(21) Application number: **91101673.1**

(51) Int. Cl.$^5$: **A01N 61/00**, A01N 47/34

(22) Date of filing: **07.02.91**

(30) Priority: **06.08.90 IT 2122890**

(43) Date of publication of application: **12.02.92 Bulletin 92/07**

(84) Designated Contracting States: **AT BE CH DE DK ES FR GB GR IT LI LU NL SE**

(71) Applicant: **Devoto, Maria Francesca**
**Residenza Fontana, 352, Milano 2**
**I-20090 Segrate(IT)**

(72) Inventor: **Devoto, Maria Francesca**
**Residenza Fontana, 352, Milano 2**
**I-20090 Segrate(IT)**

(74) Representative: **Kraus, Walter, Dr. et al**
**Patentanwälte Kraus, Weisert & Partner**
**Thomas-Wimmer-Ring 15**
**W-8000 München 22(DE)**

(54) **Composition and method to keep under control the reproduction rate of vertebrate animals by means of a composition containing peripheral dopamine agonists.**

(57) The invention concerns a composition to be used in a method to cut down drastically the proliferation of vertebrate animals, for instance rodents, said composition consisting of an attractive edible carrier impregnated with peripheral long-acting dopamine agonists of the type D-2, particularly an ergoline derivative, more particularly cabergoline.

EP 0 470 325 A1

The present invention relates to a composition and method to keep under control the reproduction rate of vertebrate animals by means of a composition containing one or more peripheral long-acting dopamine agonists of the type D-2.

The use of the well-known rodenticides, such as warfarin and a number of warfarin-like products derivatives of 4-hydroxy-coumarin, is based upon their very strong anticoagulant activity by oral route of the antivitamin K type. This activity causes deadly internal haemorrhages in rodents. The main disadvantage of said known rodenticides is the fact that these compounds can also cause the death of domestic animals, for instance cats, dogs or other pets which may eat poisoned baits.

The object of the present invention is to avoid the above-mentioned disadvantages of the well-known rodenticides and to provide a composition to be used in a method to control or even to annul the survival rate of newborn vertebrate animals with high prolificity and remarkably harmful directly or indirectly to mankind, to domestic animals and/or to environment.

More particularly, the object of the present invention is the provision of a wholly new method to cut down drastically the proliferation of some mammalian genera, especially rodents such as mice, rats, rabbits and the like.

According to the present invention the above objects are achieved by a composition to keep under control the reproduction rate of vertebrate animals which composition is characterized by containing one or more peripheral dopamine agonists together with usual carriers and excipients.

Moreover, the present invention provides a method to suppress the proliferation of vertebrate animals which is characterized by the dissemination of a composition comprising one or more peripheral dopamine agonists together with usual carriers and excipients in areas infested by said vertebrate animals.

Finally, the present invention provides the use of a peripheral dopamine agonist for controlling the reproduction rate of vertebrate animals.

The method of the present invention, which will be later on illustrated in detail, consists essentially in a suitable control of prolactin incretion in female rodents from the pre-pubertal to the post-partum stage and accordingly differs from the usual hormonal contraceptives which are employed as inhibitors of excessive prolificity of certain vertebrate animals, e.g. of doves.

This suitable control is achieved by giving the animals feed containing potent peripheral dopamine agonists of the type D-2 having a very prolonged action.

With an appropriate dosage of the active ingredients in feed or baits we can produce the following threefold effect directed to the desired target, i.e. the drastic cutting down or even the annulment of the offspring derivable from each female rodent:

(a) a delayed onset of the fertility and consequently the shortage of the fertile life span of the female rodent;

(b) a nidation inhibitory action, should copulation take place during the fertile life span of the animal;

(c) the reduction or even the total suppression of the lactation with consequent reduction of survival rate or total extermination of litter due to starvation, should parturition take place.

In other words, the substantial reduction of the rodents population according to the present invention is achieved by means of the above reported three effects instead of by killing the rodents with toxic substances such as the derivatives of 4-hydroxy-coumarin. The use of said toxic substances represents a potential risk for man, for domestic animals and for environment.

Examples of dopamine agonists which may be used within the scope of the present invention are Bromocriptine (German patent 19 26 045), Pergolide (US-A-4 166 186) and Lisuride (Semonsky et al., Coll. Czech. Chem. Comm. 25, p. 1922, 1960).

However, they are either short-acting dopamine agonists or endowed with central agonist activity, the latter characteristic being quite unsuitable for administration to rodents which become immediately alerted of the "presence" of the active ingredients in feed or baits through the so-called "state dependent learning".

Thus, according to the present invention, preferred dopamine agonists are ergoline derivatives having the following structure

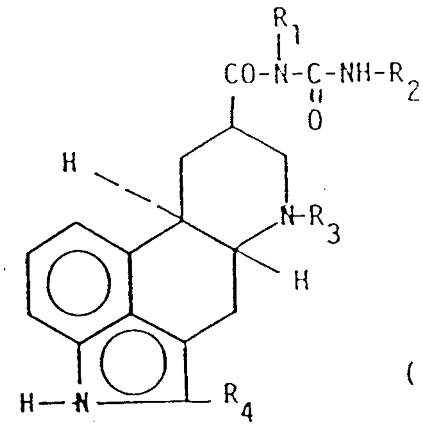

( I )

wherein $R_1$ and $R_2$ represent independently a methyl-, ethyl-, isopropyl-, dimethylaminopropyl-group, with the proviso that $R_1$ and $R_2$ cannot both be dimethylaminopropyl, $R_3$ represents a propyl- or an allyl-group, and $R_4$ represents a hydrogen-, chloro- or bromo-atom, and the addition salts with organic or inorganic acids thereof.

A particularly preferred dopamine agonist is cabergoline, i.e. 1-ethyl-3-(3'-dimethylaminopropyl)-3-(6'-allylergoline-8'β-carbonyl)-urea.

The ergoline derivatives of general formula (I), the process for their preparation, and their pharmaceutical use as anti-hypertensive, anti-prolactinic and anti-tumoral drugs are already known from U.S. patent 4 526 892. However, said document does not disclose the use according to the present invention to keep under control the reproduction rate of vertebrate animals. In accordance with the statements in said U.S. patent the ergoline derivatives of general formula (I) can be prepared by reacting an acid of general formula (II) with a carbodiimide of general formula (III)

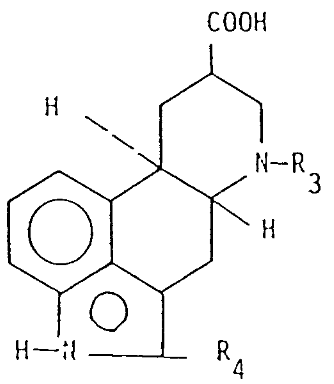

( II )

$$R_1-N=C=N-R_2$$

( III )

wherein $R_1$, $R_2$, $R_3$ and $R_4$ have the meanings reported above.

The reaction is suitably carried out at a temperature of from 50 to 100° C over a period of from 5 to 24 hours in a solvent such as tetrahydrofuran, dimethylformamide or dioxan optionally in the presence of an organic base such as pyridine or triethylamine. At the end of the reaction the products can be isolated and purified following conventional procedures, for example chromatography and/or crystallization. The intermediate acids of the general formula (II) are either known compounds or can be prepared from the corresponding esters by saponification. These intermediate esters in which $R_3$ represents a propyl- or an allyl-group may be prepared through the corresponding 6-nor-derivatives which, in their turn, are prepared according to A.M. Crider et al., Journal of Pharmaceutical Sciences, Vol. 70, No. 12, pages 1319-1321 (1981).

Formation of the desired pharmaceutically acceptable addition salts with the usual organic or inorganic acids is carried out by known methods, for instance by reaction with an appropriate acid.

The preferred compound from the class of structure I of the present invention is 1-ethyl-3-(3'-dimethylaminopropyl)-3-(6'-allylergoline-8'β-carbonyl)-urea, with the non-proprietary, generic name "cabergoline".

Cabergoline may be used both as free base and as addition salts with the usual organic or inorganic acids.

At a single oral dose of 100 micrograms per kg body weight (100 mcg/kg b.w.) in female rats, the inhibiting action on the prolactin incretion remains remarkably high more than 72 hours after treatment.

Therefore the "long acting" anti-prolactinic effect of cabergoline makes the use of the same quite suitable as a surprising mean for reducing drastically the proliferation rate of rodents from before the conception stage, during the pre-natal stage and up to the newborn stage, according to the three effects set out on page 3. And this mean is, at the same time, absolutely safe for men, for domestic animals (if casually they eat some baits containing cabergoline) and for the environment.

In fact, from the literature it is well known that the acute toxicity of cabergoline in animals is very low.

For instance, $LD_{50}$ (Lethal Dose 50) by oral route in male mice is 350 mg/kg b.w. and 200 mg/kg b.w. in female mice.

In rats $LD_{50}$ is 400 mg/kg b.w. and 350 mg/kg b.w., respectively.

A further advantage of composition and method of the present invention is due to the fact that, while the toxic action of the 4-hydroxy-coumarin is irreversible, the prolactin inhibiting action brought about by the compounds of structure I, and in particular of cabergoline is perfectly reversible. Upon interruption of the administration of said compound the normal physiologic situation is restored in the animal after some days, depending on the dose.

Another remarkable advantage of composition and method of the present invention for a sure extermination of rodents is represented by the fact that the active constituent at the dosage employed in feed or baits is endowed only with peripheral action, but it is totally devoid of any effects on the central nervous system. Thanks to this peculiarity the so-called "state-dependent learning" does not take place, i.e., it can be avoided that the animal becomes alerted and it perceives immediately the "presence" of a "dangerous" active ingredient in feed or baits and, as a consequence, the animal refuses to further eat them. This is an evident advantage both over the conventional rodenticides and also over other dopamine agonists showing central activity beside the peripheral one.

Cabergoline or other compounds of the general formula I as free bases or as addition salts with the usual organic acids such as tartaric, citric, methanesulfonic acid or inorganic acids such as phosphoric, sulfuric, hydrochloric acid, dissolved in water or in water and a suitable polar organic solvent such as ethanol or acetone are used to impregnate the usual feed or baits for rodents consisting of cereals in the form of seeds or flours of wheat, maize, barley, oats, rye, rice, soja or whatever other carriers attractive for rodents, for instance chopped dried fruits or vegetables, such as apples or carrots. Suitable excipients may be added to increase palatability.

Cabergoline as salt can be dissolved in drinking water offered to animals.

Whichever form of administration is used (feed, baits, drinking water) cabergoline is incorporated in the percentage range of between 0.0005 and 0.05% by weight.

Within the scope of the present invention it is preferred to prepare baits with the cereal flours above mentioned duly impregnated with cabergoline shaped and dried under the form of pellets. The average weight may be between 0.5 and 2.0 grams and the content in cabergoline shall be between 0.0005 and 0.05% by weight with respect to the dried weight of pellets.

Cabergoline as a free base can be advantageously dissolved in neutral oils, such as MIGLYOL® (Registered Trademark Supplier DYNAMIT NOBEL). The best type for this purpose is MIGLYOL 812 which is a triglyceride of fractionated coconut oil fatty acids $C_8$-$C_{10}$ ("caprylic/capric triglyceride"). The preferred concentration is 50 micrograms of cabergoline per ml of solution. This resulting oily solution can be thus suitably used to impregnate feed or baits.

The following examples are intended to illustrate the invention without limiting the scope thereof.

Example 1

500 g of wheat flour and 500 g of soja flour were suspended in a sufficient quantity of water under stirring to form an homogeneous pap. Then 5 mg of cabergoline as free base under form of diphosphate salt dissolved in little water were added with stirring. If desired, some droplets of edible aroma attractive for rodents may be added.

The pap was kept under stirring for 10 minutes and then it was conveyed to a suitable pelletizing machine and the pellets thus formed were dried "in vacuo" at 45 °C.

The resulting pellets weighing from 0.5 to 2.0 grams ready to be administered to rodents as baits contain cabergoline at a rate of 0.0005%, i.e., 1 gram of composition contains approximately 5 micrograms of active principle.

In order to check the efficacy of the pellets thus obtained to cut down the survival rate of pups, there were employed three groups of five nursing rats of Wistar strain per group with offspring brought forth from 1 to 3 days. The animals were fed "ad libitum" on these pellets beside drinking water. After 5 days a good deal of pups starved.

Example 2

Experimental data resulting from trials with young female rats at impuberal stage demonstrated that at the tested dose of 25 mcg/kg body weight/day "per os" caused a remarkably delayed onset of the sexual maturity. Moreover by administering cabergoline to adult female rats always at the tested dose of 25 mcg/kg b.w./day "per os" for 10 days before mating, fertility was completely inhibited. At the same dose the pregnant rats interrupted their gestation after about ten days, while in the control rats there was a normal delivery.

Example 3

15 adult female rats (Sprague Dawley) at their second delivery were randomly divided into 3 groups of 5 animals each. One group served as control, the other two groups were treated with different dosages of cabergoline: animals of the former group received it at the dose of 25 mcg/kg b.w./day; animals of the latter one received it at the dose of 100 mcg/kg b.w./day, starting from the day following the delivery.

Cabergoline was administered with a pellet of standard feed for breeding rats (Altromin MT® of the firm Rieper, Bolzano). After complete consumption of the medicated pellet, food and water were made available "ad libitum".

At the dose of 25 mcg/kg b.w./day the survival rate of the pups was evaluated in terms of their remarkably reduced body weight increase at the 7th, 14th and 21st day of lactation as well as in percentage of starvation at the 14th day of lactation: at this dose about 60% of the pups starved within the second week of lactation.

At the dose of 100 mcg/kg b.w./day 100% of pups starved already within the first week of lactation (see Table 1).

TABLE 1

| Dose mcg/kg b.w./day | No. of pups $\bar{\Sigma} \pm$ SD | Pups mean weight (in grams) | | | |
|---|---|---|---|---|---|
| | | at birth | at lactation days | | |
| | | | 7th | 14th | 21st |
| control group | 69 (13.8 ± 1.8) | 6.3 ±0.6 | 16.4 ±1.4 (2 dead) | 23.9 ±2.1 | 46.6 ±6.8 |
| 25 | 63 (12.6 ± 1.9) | 5.9 ±0.4 | 7.9 ±1.6 | 10.5 ±0.5 (40 dead) | 14.7 ±0.7 |
| 100 | 65 (13.0 ± 1.0) | 6.2 ±0.5 | - (65 dead) | - | - |

$\bar{\Sigma} \pm$ SD = Means ± Standard Deviation

## Claims

1. Composition to keep under control the reproduction rate of vertebrate animals, characterized by containing one or more peripheral dopamine agonists together with usual carriers and excipients.

2. Composition according to claim 1, characterized in that said peripheral dopamine agonist is an ergoline derivative having the general formula (I)

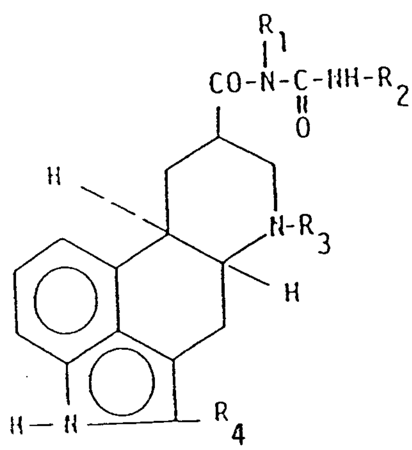

(I)

wherein $R_1$ and $R_2$ represent independently a methyl-, ethyl-, isopropyl-, dimethylaminopropyl-group, with the proviso that $R_1$ and $R_2$ cannot both be dimethylaminopropyl, $R_3$ represents a propyl or

an allyl-group, and $R_4$ represents a hydrogen-, chloro- or bromo-atom, or an addition salt with a usual organic or inorganic acid.

**3.** Composition according to claim 2, characterized in that said ergoline derivative is 1-ethyl-3-(3'-dimethylaminopropyl)-3-(6'-allylergoline-8'β-carbonyl)-urea, or an addition salt with a usual organic or inorganic acid.

**4.** Composition according to claim 3, characterized by the form of a feed or a bait comprising cereals in the form of seeds or flours of wheat, maize, barley, oats, rye, rice, and soja or chopped dried fruits or vegetables with optional addition of suitable excipients to increase palatability, the feed or bait containing 1-ethyl-3-(3'-dimethylaminopropyl)-3-(6'-allylergoline-8'β-carbonyl)-urea or the addition salt thereof in an amount of 0.0005 to 0.05 % by weight of the total weight of the composition.

**5.** Composition according to claims 1 to 4, characterized by the fact that the vertebrate animal is a rodent.

**6.** Method to suppress the proliferation of vertebrate animals, characterized by the dissemination of a composition comprising one or more peripheral dopamine agonists together with usual carriers and excipients in areas infested by said vertebrate animals.

**7.** Method according to claim 6, characterized in that said peripheral dopamine agonist is an ergoline derivative having the general formula (I)

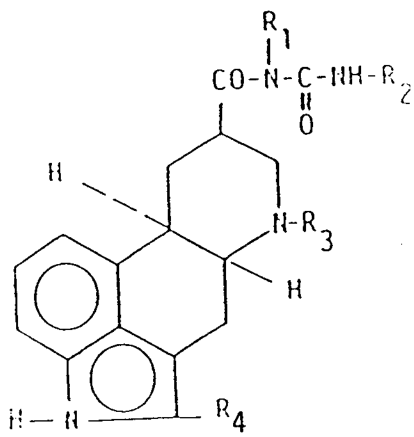

(I)

wherein $R_1$ and $R_2$ represent independently a methyl-, ethyl-, isopropyl-, dimethylaminopropyl-group, with the proviso that $R_1$ and $R_2$ cannot both be dimethylaminopropyl, $R_3$ represents a propyl or an allyl-group, and $R_4$ represents a hydrogen-, chloro- or bromo-atom, or an addition salt with a usual organic or inorganic acid.

**8.** Method according to claim 7, characterized in that said ergoline derivative is 1-ethyl-3-(3'-dimethylaminopropyl)-3-(6'-allylergoline-8'β-carbonyl)-urea, or an addition salt with a usual organic or inorganic acid.

**9.** Method according to claim 8, characterized by the dissemination of a feed or a bait comprising cereals in the form of seeds or flours of wheat, maize, barley, oats, rye, rice, and soja or chopped dried fruits or vegetables with optional addition of suitable excipients to increase palatability, the feed or bait containing 1-ethyl-3-(3'-dimethylaminopropyl)-3-(6'-allylergoline-8'β-carbonyl)-urea or the addition salt thereof in an amount of 0.0005 to 0.05 % by weight of the total weight of the composition.

**10.** Method according to claims 6 to 9, characterized by the fact that the vertebrate animal is a rodent.

**11.** Use of a peripheral dopamine agonist for controlling the reproduction rate of vertebrate animals.

**12.** Use according to claim 11, characterized in that said peripheral dopamine agonist is an ergoline

derivative having the general formula (I)

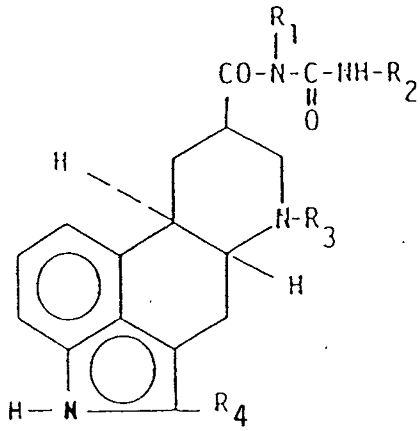

(I)

wherein $R_1$ and $R_2$ represent independently a methyl-, ethyl-, isopropyl-, dimethylaminopropyl-group, with the proviso that $R_1$ and $R_2$ cannot both be dimethylaminopropyl, $R_3$ represents a propyl or an allyl-group, and $R_4$ represents a hydrogen-, chloro- or bromo-atom, or an addition salt with a usual organic or inorganic acid.

**13.** Use according to claim 12, characterized in that said ergoline derivative is 1-ethyl-3-(3'-dimethylaminopropyl)-3-(6'-allylergoline-8'β-carbonyl)-urea, or an addition salt with a usual organic or inorganic acid.

**14.** Use according to claim 13, characterized by the dissemination of a feed or a bait comprising cereals in the form of seeds or flours of wheat, maize, barley, oats, rye, rice, and soja or chopped dried fruits or vegetables with optional addition of suitable excipients to increase palatability, the feed or bait containing 1-ethyl-3-(3'-dimethylaminopropyl)-3-(6'-allylergoline-8'β-carbonyl)-urea or the addition salt thereof in an amount of 0.0005 to 0.05 % by weight of the total weight of the composition.

**15.** Use according to claims 11 to 14, characterized by the fact that the vertebrate animal is a rodent.

European Patent Office

# EUROPEAN SEARCH REPORT

Application Number

**EP 91 10 1673**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 050 387 (AKZO N.V.)<br>* page 6, line 11 - line 14 * * | 1,6,11 | A 01 N 61/00<br>A 01 N 47/34 |
| Y | EUR. J. MEDIC. CHEM. vol. 24, no. 4, 1989, PARIS E. BRAMBILLA ET AL.: 'Syntesis and nidation inhibitory activity of a new class of ergoline derivatives'<br>* p.421 Introduction, p.423 Discussion, p.426 Pharmacology* * | 1-15 | |
| Y | FR-A-2 641 943 (ROUQUET)<br>* page 3, line 7 - page 4, line 17 * * * page 5, line 5 - line 9 * * * claims 1-8 * * | 1-15 | |
| A | GB-A-1 523 722 (G.L.R. DAVIS)<br>* line 13 - line 24; claim 11 * * * line 36 - line 46 * * * page 2, line 39 - line 43 * * * claim 11 * * | 1-15 | |
| A | EP-A-0 281 242 (ELI LILLY AND COMPANY)<br>* page 16, line 4 - line 27 * * | 1-15 | |
| A | EP-A-0 091 652 (FARMITALIA CARLO ERBA)<br>* page 4, line 15 - page 6, line 14 * * | 1-15 | **TECHNICAL FIELDS SEARCHED (Int. Cl.5)** |
| A | FR-A-2 278 339 (SPOFA USINES PHARMACEUTIQUES)<br>* page 5, line 38 - page 6, line 24 * * * claim 9 * * | 1-15 | A 01 N |

The present search report has been drawn up for all claims

| Place of search | Date of completion of search | Examiner |
|---|---|---|
| The Hague | 08 November 91 | DALKAFOUKI A. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

& : member of the same patent family, corresponding document